# EUROPÄISCHE PATENTSCHRIFT

(11) **EP 2 348 630 B1**
(45) Veröffentlichungstag und Bekanntmachung des Hinweises auf die Patenterteilung: **12.12.2012**
(21) Anmeldenummer: 10151698.7
(22) Anmeldetag: 26.01.2010
(51) Int. Cl.: H02P 21/12, H02P 21/14

(54) **Drehstrommotor-Ansteuerschaltung**
AC machine control circuit
Circuit de commande pour moteur triphasé

(43) Veröffentlichungstag der Anmeldung: 27.07.2011
(73) Patentinhaber: WITA - Wilhelm Taake GmbH, 32549 Bad Oeynhausen (DE); Strothmann, Thomas, 49565 Bramsche (DE)
(72) Erfinder: Strothmann, Thomas, 49565, Bramsche (DE)
(74) Vertreter: Zenz

(56) Entgegenhaltungen:
- DE-A1- 10 111 795
- DE-A1-102007 058 209

## Beschreibung

Die Erfindung betrifft eine Drehstrommotor-Ansteuerschaltung mit einer Leistungsschalteinrichtung, die die Anschlüsse der Wicklungen eines Drehstrommotors über Schaltbauelemente mit wenigstens zwei Versorgungsspannungspotenzialen koppeln kann, einer Sensorschaltung zum Erfassen von Wicklungsströmen und einer die Steueranschlüsse der Schaltbauelemente ansteuernden Steuerschaltung mit Eingängen zum Empfangen von die Wicklungsströme kennzeichnenden Signalen der Sensorschaltung und von Eingabesignalen, die wenigstens einen Soll-Betriebsparameter des Drehstrommotors kennzeichnen.

Es ist bekannt, Drehstrommotoren, dass heißt Asynchronmotoren oder Synchronmotoren, mit Frequenzumrichtern zu betreiben. Frequenzumrichter bestehen aus einem Gleichrichter, einem Gleichspannungs-Zwischenkreis und einem Wechselrichter. Der Gleichrichter erzeugt aus einer angelegten Versorgungswechselspannung eine Gleichspannung und speist damit den Zwischenkreis, der eine Speicherkapazität aufweist. Der Zwischenkreis wiederum speist den Wechselrichter, welcher die mehreren Phasen von Wechselspannungen erzeugt, die die Wicklungen des Drehstrommotors versorgen. Bei einer solchen Speisung aus einer Gleichspannung (das heißt, zwei Versorgungsspannungspotenzialen) des Zwischenkreises enthält der Wechselrichter üblicherweise sechs Leistungsschaltbauelemente, die jeden der drei Anschlüsse der miteinander verbundenen Wicklungen des Drehstrommotors jeweils entweder mit der Versorgungsspannung (dem ersten Versorgungsspannungspotenzial) oder mit Masse (dem zweiten Versorgungsspannungspotenzial) koppeln können. Die Steueranschlüsse der sechs Schaltbauelemente werden mit vorgegebenen Steuerimpulsen einer Steuerschaltung angesteuert, wobei beispielsweise die Breite der Steuerimpulse derart moduliert wird (Pulsbreitenmodulation; PWM), dass die - aufgrund der Wicklungsinduktivitäten - geglätteten Verläufe der Wicklungsströme sich sinusförmigen Verläufen von drei Drehstromphasen annähern. Durch geeignete Vorgabe der Steuerimpulsfolgen lassen sich sowohl die Frequenz als auch die (gemittelte) Ansteuerspannung für die Wicklungen des Drehstrommotors steuern.

Bei einer einfachen Betriebsweise eines solchen Frequenzumrichters wird die an die Wicklungen angelegte Spannung in einem konstanten Verhältnis zur Frequenz geregelt. Bei diesem sogenannten "U/f-Betrieb" sind Frequenz und Spannung zueinander proportional, was aufgrund des induktiven Verhaltens des Motors über einen weiten Bereich zu einem konstanten Drehmoment führt.

Bei einer einfachen bekannten Ausführungsform wird die Stromzufuhr zu den Motorwicklungen (Kommutierung genannt) über die sechs Schaltbauelemente so gesteuert, dass immer genau zwei von drei Drehstromwicklungen bestromt werden. Nachteilig sind hierbei die Welligkeit des Drehmoments und die Geräuschentwicklung.

Zur Verbesserung des Laufverhaltens der Motoren wurde im Stand der Technik eine feldorientierte Regelung des Wechselrichters mit einer sinuskommutierten Pulsweitenmodulation vorgeschlagen. Derartige feldorientierte Regelungen sind beispielsweise in dem Artikel von Aengus Murray, "Der richtige Dreh! - Permanentmagnet-Synchronmotoren-Regelung für drehzahlveränderliche Ventilatoren und andere natürlich rotierende Lasten", in Elektronik 11/2007, 29. Mai 2007, Seiten 38-41, oder in der Patentschrift EP 1 501 185 B1 oder auch in der Dissertation von Bassel Sahhary, "Elektrische Antriebe mit dauermagneterregten Maschinen im dynamischen sensorlosen Betrieb", Universität der Bundeswehr Hamburg, 2008, beschrieben. Die dort beschriebenen feldorientierten Regelungen erzeugen mit Hilfe einer Pulsbreitenmodulation (PWM) ein dreiphasiges Spannungssystem, dessen Zustand auch als Raumvektor dargestellt werden kann. Dieser Raumvektor wird zyklisch aus der aktuellen Rotorposition sowie den momentanen Betriebs- und Lastverhältnissen des Motors bestimmt. Die Rotorposition kann mit Hilfe von Sensoren oder - soweit der eingeschränkte Betriebsbereich dies zulässt - sensorlos aus einer Beobachtung der Phasenströme des Motors bestimmt werden, wobei die Messung von jeweils zwei von drei Phasenströmen ausreicht, da die Summe der drei Ströme stets Null ist. Aufgrund der komplexen Impedanz der Motorwicklungen weisen Spannungen und Ströme des Motors eine Phasenverschiebung auf. Soll ein Motor bei optimaler Effizienz und Laufruhe betrieben werden, muss die Phasenverschiebung bei der Erzeugung der Phasenspannungen des Motors berücksichtigt werden.

Bei einer typischen feldorientierten Regelung eines permanentmagneterregten Synchronmotors werden zunächst zwei von drei Phasenströmen gemessen. Die beiden gemessenen Phasenströme Iₐ und I_{b} haben einen Phasenversatz von 120° und weisen daher eine bestimmte Abhängigkeit voneinander auf. Mit Hilfe der Clark-Transformation werden die gemessenen, um 120° versetzten Ströme Iₐ und I_{b} in zwei orthogonale Komponenten eines (in dem feststehenden Koordinatensystem des Stators) rotierenden Stromvektors umgerechnet, welche mit I_{α} und I_{β} bezeichnet werden. Aus diesen Komponenten I_{α} und I_{β} des rotierenden Stromvektors werden unter Verwendung einer bekannten oder abgeschätzten Rotorposition (d.h. einem Augenblickswinkel ϕ_{REF} gegenüber einer Bezugsposition) mittels der Park-Transformation zwei Komponenten I_{d} und I_{q} eines in einem rotierenden Koordinatensystem definierten stationären (d.h. nicht rotierenden) Stromvektors berechnet. Dieses Koordinatensystem rotiert synchron mit dem Statorfeld, bei Synchronmotoren zugleich mit dem Rotor (Polrad). Die Komponente I_{d} ist hierbei ein "felderzeugender" Anteil, welcher bei permanentmagneterregten Motoren in der Regel Null ist. Die Komponente Iq ist ein "drehmomenterzeugender" Anteil. Dieser Anteil wird von einer von der Anwendung abhängigen Regelstruktur bestimmt, beispielsweise von einem Geschwindigkeitsregler, dem eine Solldrehzahl eingegeben wird. Über zwei Regelungen werden aus den Stromkomponenten Iq und I_{d} jeweils Spannungskomponenten U_{d} und Uq bestimmt, welche einen Spannungsvektor in dem rotierenden Koordinatensystem definieren. Mit Hilfe einer inversen Park-Transformation werden diese Werte in Spannungsvektorkomponenten U_{α} und U_{β} eines (in dem feststehenden Koordinatensystem des Stators) rotierenden Spannungsvektors umgerechnet. Anschließend erfolgt eine Umrechung in das 120°-Dreiphasensystem mittels einer inversen Clark-Transformation. Die so ermittelten Spannungsverläufe der drei Phasenspannungen werden dann in entsprechende impulsbreitenmodulierte Steuersignale zur Ansteuerung der Schaltbauelemente eines Wechselrichters umgerechnet. Eine solche Vektorregelung ist beispielsweise aus DE 101 11 795 A1 bekannt.

Während bei dieser bekannten Vektorregelung die Berechnung der Spannungsvektorkomponenten aus den Stromvektorkomponenten im stationären Bereich, das heißt anhand von Größen erfolgt, welche nicht von dem Rotationsaugenblickswinkel abhängig sind, erfolgt jedoch die Schätzung der Rotorposition und der Augenblicksrotationsgeschwindigkeit (oder Augenblicksdrehzahl) mit Hilfe eines Motormodells auf der Grundlage von Stromvektorkomponenten als Eingangsgrößen (oder Eingangssignalen), welche sich bei rotierendem Motor ständig (sinusförmig) ändern. Die bekannte Art der Positionsschätzung und der Bestimmung der Spannungskomponenten erfordert einen erheblichen Aufwand bei den bekannten Steuerschaltungen, im Falle der Verwendung einer Mikrocontroller-Steuerung einen erheblichen Berechnungsaufwand. Darüber hinaus müssen die Komponenten U_{d} und Uq des Spannungsvektors im rotierenden Koordinatensystem in Komponenten U_{α} und U_{β} des Spannungsvektors im feststehenden Koordinatensystem umgerechnet werden.

Es ist eine Aufgabe der Erfindung, die bekannten Steuerungen zu vereinfachen, insbesondere den Berechnungsaufwand zu verringern, wobei jedoch ein Betrieb des Motors bei optimaler Laufruhe beibehalten werden soll.

Diese Aufgabe wird erfindungsgemäß durch eine Drehstrommotor-Ansteuerschaltung mit den Merkmalen des Patentanspruchs 1 gelöst.

Die erfindungsgemäße Drehstrommotor-Ansteuerschaltung weist eine Leistungsschalteinrichtung, eine Sensorschaltung und eine Steuerschaltung auf. Die Leistungsschalteinrichtung kann die Anschlüsse der Wicklungen eines Drehstrommotors über Schaltbauelemente mit wenigstens zwei Versorgungsspannungspotenzialen koppeln. Dabei wird jeder Wicklungsanschluss zu jedem beliebigen Zeitpunkt entweder mit einem oder keinem der Versorgungsspannungspotenziale derart gekoppelt, dass die gewünschten Phasenspannungsverläufe über den Wicklungen entstehen. Bei den wenigstens zwei Versorgungsspannungspotenzialen kann es sich beispielsweise um eine Versorgungsgleichspannung und Masse handeln; es sind aber auch Ausführungsformen denkbar, bei denen die Versorgungsspannungspotenziale die drei Phasen einer Dreiphasen-wechselspannung sind. Die Sensorschaltung dient zum Erfassen von Wicklungsströmen, wobei nicht sämtliche Wicklungsströme erfasst werden müssen. Die die Steueranschlüsse der Schaltbauelemente ansteuernde Steuerschaltung weist Eingänge zum Empfangen von die Wicklungsströme kennzeichnenden Signalen der Sensorschaltung und Eingänge zum Empfangen von Eingabesignalen auf, die wenigstens einen Soll-Betriebsparameter des Drehstrommotors kennzeichnen. Die Soll-Betriebsparameter umfassen beispielsweise eine Soll-Drehzahl oder ein Soll-Drehmoment. Die Steuerschaltung weist eine Einrichtung auf, die aus den die Wicklungsströme kennzeichnenden Signalen ein Stromamplitudensignal, ein einem Augenblickswinkel entsprechendes Stromwinkelsignal und ein der Augenblicksdrehzahl entsprechendes Drehzahlsignal bestimmt. Bei dem Stromamplitudensignal kann es sich beispielsweise um den Betrag des rotierenden Stromvektors oder auch um die vorzeichenbehaftete, drehmomenterzeugende Komponente des in dem rotierenden Koordinatensystem definierten (dort stationären) Stromvektors handeln. Entsprechend kann es sich bei dem Stromwinkelsignal beispielsweise um ein Signal handeln, dass den Referenzwinkel des Rotors oder auch den Winkel des rotierenden Stromvektors kennzeichnet. In Abhängigkeit von der Ausführungsform der Steuerschaltung kann es sich bei den Signalen um digitale Signale oder Werte von Variablen, die während der Abarbeitung eines Programms in einem Mikrocontroller verwendet werden, handeln. Die Steuerschaltung weist ferner eine Einrichtung auf, die unter Verwendung der Eingabesignale und des Drehzahlsignals ein Spannungsamplitudensignal eines rotierenden Spannungsvektors ermittelt. Bei einer Ausführungsform kann das Spannungsamplitudensignal ein vorzeichenbehafteter Spannungswert sein, das heißt auch negative Werte annehmen, was in einer entsprechenden Phasenlage Berücksichtigung findet. Um die Berechnungen zu vereinfachen, kann je nach Bedarf zwischen einer negativen Amplitude und einer zusätzlichen Phasendrehung um 180° gewechselt werden, denn diese Darstellungen sind äquivalent. Bei anderen Ausführungsformen dagegen kann der Spannungswert auch ein stets positiver Betrag sein. Darüber hinaus weist die Steuerschaltung eine Motormodelleinrichtung auf, die unter Berücksichtigung von Motorparametern aus dem Drehzahlsignal und dem Stromamplitudensignal ein Phasendifferenzsignal bestimmt, sowie eine Summiereinrichtung, die aus der Summe des Phasendifferenzsignals und des Stromwinkelsignals ein Phasenwinkelsignal des rotierenden Spannungsvektors bestimmt. Schließlich weist die Steuerschaltung eine Raumvektormodulator-Einrichtung auf, die aus den den rotierenden Spannungsvektor definierenden Signalen, das heißt aus dem Spannungsamplitudensignal und dem Phasenwinkelsignal, die Signale zum Ansteuern der Steueranschlüsse der Schaltbauelemente der Leistungsschalteinrichtung bestimmt.

Im Unterschied zu den oben genannten bekannten feldorientierten Regelungen arbeitet die Motormodelleinrichtung ausschließlich mit Signalen oder Größen, welche sich nicht ständig mit der Rotation des Rotors ändern, also in einem stationären Rotationszustand konstant bleiben. Darüber hinaus werden bei der erfindungsgemäßen Ansteuerschaltung nicht die Vektorkomponenten des Spannungsvektors im rotierenden Koordinatensystem, sondern ausschließlich eine Amplitude und ein Winkel des rotierenden Spannungsvektors im ortsfesten Koordinatensystem berechnet. Hierbei wird die Berechnung des Spannungsamplitudensignals von einer Einrichtung ausgeführt, welche die Eingabesignale, die die Soll-Betriebsparameter kennzeichnen, berücksichtigt, das heißt von einer applikationsspezifischen Einrichtung. Dagegen berechnet eine andere Einrichtung, nämlich die Motormodelleinrichtung, ein Phasendifferenzsignal, welches in der Summiereinrichtung eingegeben wird. Lediglich diese Summiereinrichtung erhält ein sich mit der Rotation ständig änderndes Signal, nämlich das Stromwinkelsignal. Die Berechnung, in die dieses sich mit der Rotation ständig ändernde Signal einfließt, ist somit lediglich eine Addition. Diese erfindungsgemäße Ausgestaltung führt zu einer stark vereinfachten und preiswerten Steuerschaltung. Bei einer Ausführungsform, bei der diese Steuerschaltung mit Hilfe eines Mikrocontrollers realisiert wird, führt die erfindungsgemäße Ausgestaltung zu einem verringerten Berechnungsaufwand, der die Verwendung eines preiswerteren Mikrocontrollers gestattet.

Eine bevorzugte Ausführungsform der Drehstrommotor-Ansteuerschaltung ist dadurch gekennzeichnet, dass die Einrichtung, die aus den die Wicklungsströme kennzeichnenden Signalen ein Stromamplitudensignal, ein dem Augenblickswinkel entsprechendes Stromwinkelsignal und ein der Augenblicksdrehzahl entsprechenden Drehzahlsignal bestimmt, eine erste Transformationseinrichtung, die aus den die Wicklungsströme kennzeichnenden Signalen zwei orthogonale Komponenten eines in dem feststehenden Koordinatensystem der Stator-Wicklungen des Drehstrommotors rotierenden Stromvektors bestimmt, und ferner eine Einrichtung aufweist, die aus den zwei orthogonalen Komponenten das Stromamplitudensignal, das Stromwinkelsignal und das Drehzahlsignal bestimmt. Die von der ersten Transformationseinrichtung ausgeführte Transformation wird auch als Clarke-Transformation bezeichnet. Vorzugsweise ist diese Ausführungsform der Drehstrommotor-Ansteuerschaltung dadurch gekennzeichnet, dass die Einrichtung, die aus den zwei orthogonalen Komponenten das Stromamplitudensignal, das Stromwinkelsignal und das Drehzahlsignal bestimmt, eine zweite Transformationseinrichtung aufweist, die aus den zwei orthogonalen Komponenten des in dem feststehenden Koordinatensystem rotierenden Stromvektors zwei Komponenten eines Stromvektors in einem mit dem Drehfeld des Drehstrommotors rotierenden Koordinatensystem bestimmt. Diese zweite Transformation wird auch als Park-Transformation bezeichnet. Die hierbei erzeugten beiden Komponenten umfassen eine felderzeugende Komponente und eine drehmomenterzeugende Komponente. Die drehmomenterzeugende Komponente wird als Stromamplitudensignal verwendet. Ferner ist eine Einrichtung vorgesehen, die aus der felderzeugenden Komponente mittels Integration unter Verwendung vorgegebener Anfangswerte das Drehzahlsignal und anschließend das Stromwinkelsignal bestimmt und das so bestimmte Stromwinkelsignal wieder der zweiten Transformationseinrichtung als Referenzwinkel, der die Orientierung des mit Drehfeld des Drehstrommotors rotierenden Koordinatensystem definiert, eingibt. Vorzugsweise wird hierbei die felderzeugende Komponente mit einem ersten Faktor multipliziert, so dass man einen Wert für die Winkelbeschleunigung (α) erhält. Dieser Winkelbeschleunigungswert wird integriert, um das Drehzahlsignal (ω) zu gewinnen, wobei dem Integrator ein Startwert für das Drehzahlsignal, vorzugsweise der Wert Null, zugeführt wird. Bei einer Ausführungsform wird anschließend das Drehzahlsignal als erstes Eingabesignal einem Summierer zugeführt, wobei als zweites Eingabesignal die mit einem zweiten Faktor multiplizierte felderzeugende Komponente zugeführt wird. Die Summe wird wiederum einem Integrator zugeführt, der das Stromwinkelsignal (ϕ_{REF}) erzeugt, wobei diesem Integrator wiederum ein Startwert, das heißt ein vorgegebener Anfangswinkel, vorzugsweise der Wert Null, zugeführt wird. Das so gewonnene Stromwinkelsignal stellt den Referenzwinkel dar, der wiederum der zweiten Transformationseinrichtung zugeführt wird und der die jeweilige Orientierung des rotierenden Koordinatensystems angibt. Diese Ausführungsform hat den Vorteil, dass auch dann, wenn relativ geringe Ströme erfasst werden, und somit eine nur sehr geringe felderzeugende Komponente vorliegt, dennoch ständig sowohl ein verwertbares Drehzahlsignal als auch ein verwertbares Stromwinkelsignal erzeugt werden.

Bei einer alternativen, einfacheren Ausführungsform weist die Einrichtung, die aus den zwei orthogonalen Komponenten das Stromamplitudensignal, das Stromwinkelsignal und das Drehzahlsignal bestimmt, eine dritte Transformationseinrichtung auf, die aus den zwei orthogonalen Komponenten des rotierenden Stromvektors einen Betrag und einen Phasenwinkel des rotierenden Stromvektors bestimmt, somit die Darstellung im kartesischen Koordinatensystem in eine Polarkoordinatendarstellung umrechnet. Der Betrag wird dann als Stromamplitudensignal und der Phasenwinkel als Stromwinkelsignal verwendet. Ferner ist eine Einrichtung vorgesehen, die aus dem Phasenwinkel des rotierenden Stromvektors mittels Differentiation das Drehzahlsignal bestimmt. Diese Ausführungsform ist einfacher, arbeitet allerdings nur dann korrekt, wenn die Ströme nicht zu klein werden.

Bei einer bevorzugten Ausführungsform der erfindungsgemäßen Drehstrommotor-Ansteuerschaltung ist der Drehstrommotor ein permanentmagneterregter Synchronmotor, so dass der Referenzwinkel (bei der zuvor genannten bevorzugten Ausführungsform) bzw. der Phasenwinkel (bei der zuletzt genannten vereinfachten Ausführungsform) auch die Orientierung des Rotors definiert. Bei einem Synchronmotor stimmen die Orientierung des Feldes und die des Rotors überein; es gibt keinen Schlupf, wie beispielsweise bei einem Asynchronmotor. Bei einem permanentmagneterregten Synchronmotor kommt hinzu, dass die felderzeugende Komponente des Stromvektors in einem mit dem Drehfeld rotierenden Koordinatensystem unerwünscht ist und somit auf Null geregelt wird. Dies bedeutet außerdem, dass die drehmomenterzeugende Komponente sich der Stromamplitude des rotierenden Stromvektors annähert. Unter diesen Voraussetzungen arbeitet die erfindungsgemäß vorgeschlagene Vereinfachung besonders gut.

Die Motormodelleinrichtung, die unter Berücksichtigung von Motorparametern aus dem Drehzahlsignal und dem Stromsignal ein Phasendifferenzsignal (der Phasendifferenz zwischen Strom und Spannung) bestimmt, implementiert ein Modell für den Drehstrommotor. Bei einer bevorzugten Weiterbildung der Erfindung bestimmt die Motormodelleinrichtung als Phasendifferenzsignal den Winkel zwischen einem ersten Zeiger und einem Summenzeiger, der aus dem ersten Zeiger und einem senkrecht zum ersten Zeiger orientieren zweiten Zeiger zusammengesetzt ist. Der Betrag des ersten Zeigers (k_{E*}ω/2π + I*R) entspricht der Summe aus einem Produkt des Drehzahlsignals (ω) mit einem Rotorfluss-Motorparameter (k_{E}/2π) und dem Produkt des Stromsignals (I) mit einem der Statorwicklung zugeordneten Widerstands-Motorparameter (R). Der Betrag des zweiten Zeigers (ω)L_{*}I) entspricht dem Produkt des Stromsignals (I) mit dem Drehzahlsignal (ω) und einem der Statorwicklung zugeordneten Induktivitäts-Motorparameter (L). Die Motorparameter (Rotorfluss-Motorparameter, Widerstands-Motorparameter und Induktivitäts-Motorparameter) sind Eingabewerte der Motormodelleinrichtung. Diese bevorzugte und besonders einfache Motormodelleinrichtung geht von der Näherung aus, dass die felderzeugende Komponente auf Null geregelt wird, wodurch sich die auf dem ohmschen Widerstand der Statorwicklung basierende Komponente der Spannung in Phase mit derjenigen Komponente befindet, die auf den Rotorfluss oder die sogenannte EMK zurückgeht. Dazu senkrecht steht dann die Spannungskomponente, die auf der Induktivität der Statorwicklung basiert. Der Fachmann erkennt, daß das von diesem einfachen Modell gelieferte Phasendifferenzsignal aus der homogenen Lösung der allgemeinen, den Motor beschreibenden Differentialgleichung hervorgeht.

Für anspruchsvolle Anwendungen kann die vollständige Differentialgleichung im Modell abgebildet sein. Zu dem Phasendifferenzsignal wird dann einfach ein weiteres Phasensignal addiert, welches mit dem zuvor genannten Verfahren der Winkelbestimmung ermittelt wird, in diesem Fall allerdings aus der inhomogenen Lösung der Differentialgleichung. Dieser spezifische Anteil berücksichtigt Störungen, die z.B. in Form von Abweichungen von der (in der homogenen Lösung angenommenen) gleichförmigen Rotation durch plötzliche Laständerungen entstehen können. Da die gleichförmige Rotation bereits durch den einfachen, d.h. "homogenen" Teil der Motormodelleinrichtung abgedeckt ist, arbeitet dieser inhomogene Teil vorteilhaft mit den bereits in den stationären Zustand überführten Eingangssignalen oder Eingabewerten (Drehzahlsignal ω und Stromsignal I), die sich nicht ständig mit der Rotation ändern.

Bei einem permanentmagneterregten Synchronmotor beispielsweise enthält die Differentialgleichung für die Spannung drei Summanden, die im Bildbereich als komplexe Zeiger darstellbar sind. Die drei Zeiger entsprechen einem Spannungsabfall über dem ohmschen Statorwicklungswiderstand, einem Spannungsabfall über der Statorwicklungsinduktivität und einem Spannungsabfall (auch "Polradspannung" genannt) aufgrund des Beitrags des Rotorflusses zur Statorflussverkettung.

Bei einer bevorzugten Ausführungsform der Erfindung ist die Steuerschaltung ein Mikrocontroller. In diesem Fall umfasst die erste Transformationseinrichtung einen Analog-Digital-Umsetzer, der die die Wicklungsströme kennzeichnenden Signale in Digitalwerte umsetzt. Bei einer anderen Ausführungsform kann auch die Sensorschaltung einen Analog-Digital-Umsetzer aufweisen, so dass sie die die Wicklungsströme kennzeichnenden Signale als Digitalwerte ausgibt. Bei den Einrichtungen der als Mikrocontroller ausgebildeten Steuerschaltung, wie beispielsweise bei der Einrichtung, die aus den die Wicklungsströme kennzeichnenden Signalen ein Stromamplitudensignal, ein Stromwinkelsignal und ein Drehzahlsignal bestimmt, oder der Einrichtung, die unter Verwendung der Eingabesignale und des Drehzahlsignals ein Spannungsamplitudensignal ermittelt, oder der Motormodelleinrichtung sowie der Summiereinrichtung handelt es sich jeweils um den Prozessor des Mikrocontrollers, der programmgesteuert die entsprechenden Eingabesignale oder Eingabewerte verarbeitet, um die jeweiligen Ausgabewerte zu berechnen. Bei der Raumvektormodulator-Einrichtung, die aus den den rotierenden Spannungsvektor definierenden Signalen die Signale zum Ansteuern der Steueranschlüsse der Schaltbauelemente bestimmt, handelt es sich ebenfalls um den Prozessor des Mikrocontrollers, wobei Digital-Analog-Umsetzer oder digitale Ausgabeports des Mikrocontrollers mit den Steueranschlüssen der Schaltbauelemente gekoppelt sind. Bei alternativen Ausführungsformen könnte die Steuerschaltung auch als FPGA (Field Programmable Gate Array) oder in analoger Schaltungstechnik ausgebildet sein.

Die Wicklungen des Drehstrommotors können einer beliebigen Anzahl von Drehstromphasen zugeordnet sein. Vorzugsweise sind die Wicklungen jedoch drei Drehstromphasen zugeordnet, wobei die Sensorschaltung zumindest die Wicklungsströme von denjenigen Wicklungen erfasst, die zwei der drei Drehstromphasen zugeordnet sind. Bei einer bevorzugten Ausführungsform ist die Leistungsschalteinrichtung ein Wechselrichter, der die Anschlüsse der Wicklungen des Drehstrommotors über Schaltbauelemente entweder mit einem Versorgungsgleichspannungspotential oder mit einem Massepotential koppeln kann. Die Raumvektormodulator-Einrichtung, die aus den den rotierenden Spannungsvektor definierenden Signalen die Signale zum Ansteuern der Steueranschlüsse der Schaltbauelemente bestimmt, legt impulsbreitenmodulierte Signale an die Steueranschlüsse an. Die Induktivität der Wicklungen sorgt hierbei für eine Glättung der durch die Spannungsimpulse erzeugten Ströme.

Eine Weiterbildung der erfindungsgemäßen Drehstrommotor-Ansteuerschaltung ist dadurch gekennzeichnet, dass die Motormodelleinrichtung ferner das Spannungsamplitudensignal des rotierenden Spannungsvektors empfängt und in die Bestimmung des Phasendifferenzsignals einbezieht. Die Motormodelleinrichtung kann hierbei das empfangene Spannungsamplitudensignal mit einem Spannungsamplitudensignal vergleichen, das sie aus den Motorparametern, dem Drehzahlsignal und dem Stromamplitudensignal bestimmen kann.

Vorteilhafterweise wird die erfindungsgemäße Drehstrommotor-Ansteuerschaltung zur Ansteuerung eines permanentmagneterregten Synchronmotors eines Pumpenantriebs verwendet. Bei einer solchen Verwendung treten extreme Lastwechsel nicht auf, so dass sich auch bei den oben vorgeschlagenen bevorzugten Vereinfachungen eine sehr gute und zuverlässige Ansteuerung des Pumpenmotors mit großer Laufruhe ergibt.

Vorteilhafte und/oder bevorzugte Weiterbildungen der Erfindung sind in den Unteransprüchen gekennzeichnet.

Nachfolgend wird die Erfindung anhand von in den Zeichnungen dargestellten bevorzugten Ausführungsformen näher beschrieben. In den Zeichnungen zeigen:
Figur 1 eine schematische Blockdarstellung eines bevorzugten Ausführungsbeispiels der erfindungsgemäßen Drehstrommotor-Ansteuerschaltung; und
Figur 2 eine alternative, vereinfachte Ausführungsform der erfindungsgemäßen Drehstrommotor-Ansteuerschaltung.

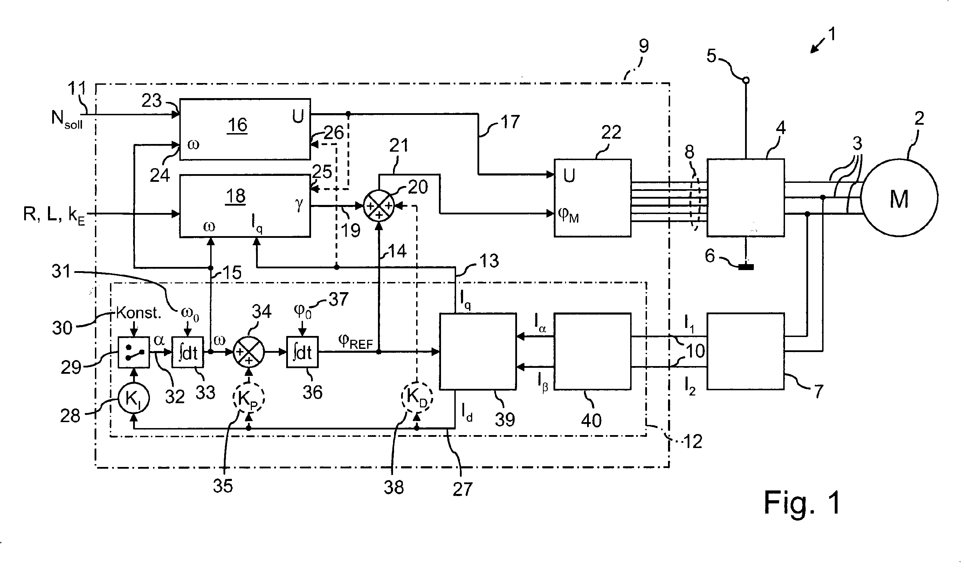

Figur 1 zeigt eine schematische Blockdarstellung eines bevorzugten Ausführungsbeispiels der erfindungsgemäßen Drehstrommotor-Ansteuerschaltung 1. Ein Drehstrommotor 2, vorzugsweise ein permanentmagneterregter Synchronmotor, weist bei diesem Ausführungsbeispiel drei in Dreieckschaltung geschaltete Wicklungen auf und somit drei Anschlüsse 3. Mittels einer Leistungsschalteinrichtung 4 können diese drei Wicklungsanschlüsse 3 jeweils entweder mit einer Versorgungsgleichspannung 5 oder mit Masse 6 verbunden werden. Vorzugsweise ist jeder der drei Wicklungsanschlüsse 3 mit jeweils einem Leistungsschaltbauelement mit der Versorgungsspannung und einem Leistungsschaltbauelement mit Masse 6 gekoppelt. Die sechs Leistungsschaltbauelemente weisen jeweils einen Steueranschluss auf, so dass die Leistungsschalteinrichtung 4 insgesamt sechs Steueranschlüsse aufweist. Die sechs Steueranschlüsse 8 sind mit einer Steuerschaltung 9 gekoppelt, die geeignete Steuerimpulse an die Steueranschlüsse 8 anlegt, so dass die drei Wicklungen mit den jeweils gewünschten Spannungsverläufen beaufschlagt werden. Nicht in Figur 1 dargestellt ist die Schaltungsanordnung, welche die Versorgungsgleichspannung 5 erzeugt. Bei der Versorgungsgleichspannung 5 kann es sich beispielsweise um eine Zwischenkreisspannung eines Frequenzumrichters handeln, welche durch Gleichrichtung aus einer einphasigen Wechselspannung oder einer Dreiphasen-Wechselspannung erzeugt worden ist.

Die Drehstrommotor-Ansteuerschaltung 1 weist ferner eine Sensorschaltung 7 auf, die die in wenigstens zwei der drei Wicklungsanschlüsse fließenden Ströme erfasst. Dies ist ausreichend, da die Summe der Ströme in den drei Wicklungsanschlüssen Null ist. Die Sensorschaltung 7 gibt an ihren Ausgängen zwei Signale aus, die die Augenblicksströme der beiden Wicklungen darstellen. Diese Signale sind in Figur 1 mit I₁ und I₂ bezeichnet und werden an Eingangsanschlüsse 10 der Steuerschaltung 9 angelegt.

Die Steuerschaltung 9 enthält als Eingaben ferner eine Soll-Drehzahl Nₛₒ₁₁ am Eingang 11 und ferner als Eingabewerte Motorparameter R, L, k_{E} des Motors 2. Weitere Eingabesignale können ein Soll-Drehmoment umfassen. Aus den Eingabesignalen 11 und den gemessenen Stromsignalen I₁ und I₂ sowie den Motorparametern R, L, k_{E} berechnet die Steuerschaltung 9 die an die Steueranschlüsse 8 anzulegenden Steuerspannungen.

Bei einer bevorzugten Ausführungsform ist die Steuerschaltung ein Mikrocontroller, der einen Prozessor, einen Programmspeicher, einen Arbeitsspeicher sowie Eingabe- und Ausgabe-Ports ausweist, wobei sowohl digitale als auch analoge Eingabe- und Ausgabe-Ports vorgesehen sein können. Analoge Ausgabe-Ports sind mit einem Digital-Analog-Umsetzer versehen und analoge Eingabe-Ports mit einem Analog-Digital-Umsetzer. Bei dem in Figur 1 dargestellten Ausführungsbeispiel werden die Steueranschlüsse 8 der Leistungsschalteinrichtung an digitale Ausgabe-Ports des Mikrocontrollers 9 angekoppelt, wobei die Ausgangsimpulse dieser Ausgabe-Ports pulsweitenmoduliert sind, so dass ein gewünschter Spannungsverlauf und - aufgrund der Glättung durch die Wicklungsinduktivitäten - ein gewünschter Stromverlauf erzielt werden kann. Der in Figur 1 dargestellte Mikrocontroller weist ferner an den Eingängen 10 Analog-Digital-Umsetzer auf, die die empfangenen, die Wicklungsströme darstellenden analogen Signale in Digitalwerte umsetzen.

Die in Figur 1 im Inneren der Umgrenzung für den Mikrocontroller 9 dargestellten Blöcke stellen somit nicht die Hardware-Komponenten des Mikrocontrollers 9 dar; vielmehr symbolisieren diese Blöcke die Verarbeitung von Digitalwerten, die aus den Analogsignalen abgeleitet sind. Bei alternativen Ausführungsformen, bei denen kein Mikrocontroller eingesetzt wird, könnten diese Blöcke aber auch separaten Verarbeitungsschaltungen entsprechen.

Die Verarbeitungsblöcke des Mikrocontrollers umfassen den mit einer Strich-Punkt-Linie umrandeten Block 12, der aus den die Wicklungsströme I₁ und I₂ darstellenden Digitalwerten jeweils ein Stromamplitudensignal 13, ein dem Augenblickswinkel entsprechendes Stromwinkelsignal 14 und ein der Augenblicksdrehzahl oder der Winkelgeschwindigkeit entsprechendes Drehzahlsignal 15 bestimmt. Zunächst werden die Wicklungsströme I₁ und 1₂ darstellenden Werte im Block 40, der eine Clarke-Transformation implementiert, in zwei Komponenten I_{α} und I_{β} eines im feststehenden Koordinatensystem des Stators mit dem umlaufenden Rotor rotierenden Stromzeigers umgerechnet. Diese Komponenten I_{α} und I_{β} des rotierenden Stromzeigers werden dann im Block 39, der eine Park-Transformation implementiert, in Komponenten Iq und I_{d} eines Zeigers transformiert, der in einem rotierenden Koordinatensystem definiert ist, wobei dieses Koordinatensystem mit dem Feld, welches von den Statorwicklungen erzeugt wird, rotiert. Deshalb wird die sich auf diese Komponenten Iq und I_{d} stützende, nachfolgend beschriebene Regelung auch als feldorientierte Regelung (FOC - Field Oriented Control) bezeichnet. Bei einem Synchronmotor stimmt diese Rotation des Drehfeldes mit der Rotation des Rotors überein. Damit aus den Komponenten I_{α} und I_{β} des rotierenden Stromzeigers die Komponenten Iq und I_{d} des im rotierenden Koordinatensystem feststehenden Zeigers berechnet werden können, benötigt der Verarbeitungsblock 39 den Augenblickswinkel ϕ_{REF}, der die augenblickliche Winkelposition des Drehfeldes des Drehstrommotors 2 (und bei einem Synchronmotor auch die Augenblicksposition des Rotors) angibt. Der im rotierenden Koordinatensystem stationäre Stromvektor umfasst eine drehmomenterzeugende Komponenten Iq und eine felderzeugende Komponente I_{d}. Die drehmomenterzeugende Komponente Iq stellt einen Eingabewert 13 (und somit ein Eingabesignal) für ein unten näher erörtertes Motormodell 18 dar. Aus der felderzeugenden Komponente I_{d} 27, welche beispielsweise bei einem permanentmagneterregten Synchronmotor stets auf Null geregelt wird, werden die Augenblicksdrehzahl bzw. Augenblickswinkelgeschwindigkeit ω und der Referenzwinkels ϕ_{REF} bestimmt. Dazu wird die felderzeugende Komponente I_{d} mit einem Faktor K_{I} 28 multipliziert und einer Auswahllogik 29 zur Verfügung gestellt. Die Auswahllogik 29 wählt (vorzugsweise beim Starten des Motors) eine Konstante 30 oder (anschließend) die mit dem Faktor K_{I} multiplizierte felderzeugende Komponente I_{d} als Winkelbeschleunigung α 32 aus. Die Winkelbeschleunigung α 32 wird einer Integration 33 zugeführt, wobei ein Startwert 31 für die bei der Integration gewonnene Winkelgeschwindigkeit einzugeben ist. Der Anfangswert ω₀ 31 ist vorzugsweise gleich Null. Am Ausgang der Integration 33 steht die Augenblickswinkelgeschwindigkeit ω 15 zur Verfügung, die ebenfalls dem unten näher beschriebenen Motormodell 18 sowie einer applikationsspezifischen Regeleinrichtung 16 zugeführt wird, die ebenfalls unten näher beschrieben wird. Die Winkelgeschwindigkeit ω 15 wird außerdem einer Summenbildung 34 zugeführt. Ein weiterer Eingabewert der Summenbildung 34 ist die mit einem Faktor Kₚ 35 multiplizierte felderzeugende Komponente I_{d} 27. Die Summe aus der am Ausgang der Integration 33 zur Verfügung gestellten Winkelgeschwindigkeit ω und dem Produkt K_{P} x I_{d} wird einer zweiten Integration 36 zugeführt, die den Referenzwinkel ϕ_{REF} zur Verfügung stellt. Auch dieser Integration ist ein Startwert ϕ₀ 37 zur Verfügung zu stellen, wobei auch dieser Startwert vorzugsweise gleich Null ist. Der so erzeugte Referenzwinkel ϕ_{REF} 14 wird einerseits dem bereits beschriebenen Block 39 zur Verfügung gestellt und andererseits einer Summiereinrichtung 20.

Die felderzeugende Komponente I_{d} 27 wird außerdem mit einem Faktor K_{D} 38 multipliziert und ebenfalls der Summierung 20 zugeführt. Dies ist in Figur 1 gestrichelt dargestellt, da es bei einigen Ausführungsbeispielen entfallen kann. Die felderzeugende Komponente I_{d} 27 wirkt somit an drei Punkten der Regelung auf die Erzeugung des Spannungsphasenwinkels ϕ_{M} 21 ein, nämlich erstens bei der Gewinnung eines Wertes für die Winkelbeschleunigung α, wobei die felderzeugende Komponente I_{d} mit dem Faktor K_{I} multipliziert wird, ferner bei der Berechnung des dem Integrator 36 zugeführten Wertes für die Winkelgeschwindigkeit ω, wobei hier die felderzeugende Komponente I_{d} mit dem Faktor Kₚ 35 multipliziert wird, und schließlich bei der Berechnung des dem Block 22 zugeführten Phasenwinkels ϕ_{M} 21, wobei hier der Summiereinrichtung 20 die mit dem Faktor K_{D} 38 multiplizierte felderzeugende Komponente I_{d} zugeführt wird. Mit den Indizes I, P und D wird symbolisiert, dass diese Einwirkung in der Art einer PID-Regelung mit integrierender, proportionaler und differenzierender Komponente wirkt.

Ein wesentlicher Bestandteil der erfindungsgemäßen Drehstrommotor-Ansteuerschaltung ist das Motormodell 18. Der das Motormodell bildende Logikblock 18 erhält als Eingabeparameter Motorparameter, die den ohmschen Widerstand R der Motorwicklungen, die Induktivität L der Wicklungen und die den Rotorfluss bestimmende Konstante k_{E} umfassen. Ferner erhält das Motormodell 18 als laufende Eingangswerte die Winkelgeschwindigkeit ω 15 und die drehmomenterzeugende Komponente Iq 13. Daraus kann das Motormodell den jeweiligen Phasendifferenzwinkel γ 19 berechnen, der den Winkel zwischen dem Stromzeiger und dem zugehörigen Spannungszeiger für die Spannungsansteuerung der Motorwicklungen beschreibt. Die Summe aus dem Referenzwinkel ϕ_{REF} 14 des jeweiligen Stromvektors und dem Phasendifferenzwinkel γ 19, welche durch die Summiereinrichtung 20 veranschaulicht ist, ergibt einen Phasenwinkel ϕ_{M} 21 eines Spannungsvektors. Die Amplitude des Spannungsvektors U wird in einem applikationsspezifischen Logikblock 16 berechnet. Diese Spannungsamplitude U 17 wird aus Eingabewerten bestimmt, die Soll-Betriebsparameter des Drehstrommotors 2 kennzeichnen, und darüber hinaus aus der Augenblickswinkelgeschwindigkeit ω und gegebenenfalls auch aus der drehmomenterzeugenden Komponente Iq 13 des Stromvektors. Die der applikationsspezifischen Logik 16 zugeführten Signale sind durch die Eingabepfeile 23, 24 und 26 veranschaulicht. Der von dem Signal 13 zum Eingang 26 führende Pfeil ist nur gestrichelt dargestellt, weil diese Eingabe bei einer einfachen Ausführungsform auch entfallen könnte. Aus diesen Eingangswerten berechnet der Logikblock 16 eine Spannungsamplitude U 17.

Bei einer Ausführungsform kann die Spannungsamplitude U 17 auch vorzeichenbehaftet sein, das heißt auch negative Werte annehmen. Beispielsweise könnte der Logikblock 16 eine Spannung 17 berechnen, die das Produkt eines Proportionalitätsfaktors (Regelverstärkung) mit einer Differenz zwischen einer Soll-Drehzahl Nₛₒₗₗ und der Augenblicksdrehzahl ω 15 ist.

Der aus dem Logikblock 16 herrührende Spannungswert 17, welcher auch vorzeichenbehaftet sein kann, und der aus der Summiereinrichtung 20 herrührende Spannungsphasenwinkel ϕ_{M} werden einem Raumvektormodulator 22 zugeführt, der aus diesen einen Spannungsvektor definierenden Signalen oder Eingabewerten die Steuerimpulse berechnet, welche an die Steueranschlüsse 8 angelegt werden. Der Raumvektormodulator 22 berechnet aus dem durch die Eingabewerte definierten rotierenden Spannungsvektor die drei Spannungsvektoren für die drei Spannungsverläufe, die an die drei Wicklungsanschlüsse 3 anzulegen sind. Aus diesen drei Spannungsverläufen berechnet der Raumvektormodulator 22 entsprechende Impulsfolgen, wobei die Breiten der Impulse proportional den Augenblicksspannungen sind. Der Raumvektormodulator 22 implementiert somit sowohl die Umrechnung in die drei Wicklungsspannungsvektoren als auch die Pulsweitenmodulation zur Ansteuerung der Schaltbauelemente in der Leistungsschalteinrichtung 4.

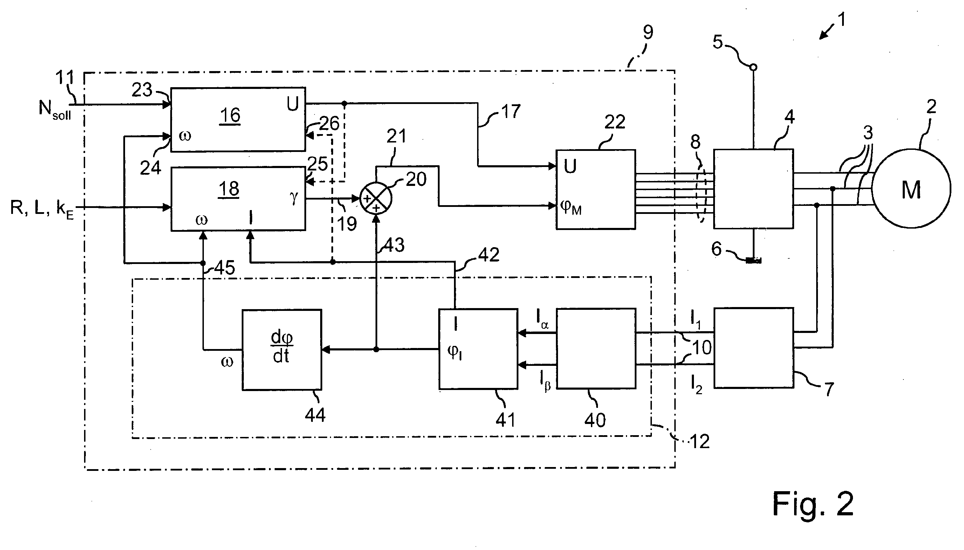

Figur 2 zeigt ein alternatives Ausführungsbeispiel, bei welchem der Logikblock 12 vereinfacht ist. Die übrigen Bestandteile der Steuerschaltung 9 entsprechen denen der Steuerschaltung 9 gemäß Figur 1 und sind auch mit denselben Bezugszeichen bezeichnet. Der Logikblock 12, der aus den die Wicklungsströme kennzeichnenden Werten (I₁ und I₂) ein Stromamplitudensignal, ein dem Augenblickswinkel entsprechendes Stromwinkelsignal und ein der Augenblicksdrehzahl entsprechendes Drehzahlsignal bestimmt, enthält zunächst - wie auch der Block 12 in Figur 1 - einen Block 40, der mittels der bekannten Clarke-Transformation die orthogonalen Komponenten I_{α} und I_{β} des im Statorkoordinatensystems rotierenden Stromzeigers berechnet. Die kartesischen Komponenten des rotierenden Stromzeigers I_{α} und I_{β} werden dem Block 41 zugeführt, der eine Umrechnung in Polarkoordinaten durchführt und somit einen Ausgabewert für den Betrag des Stromvektors I 42 erzeugt und darüber hinaus den Stromwinkel ϕ_{I} 43. Der Stromwinkel ϕ_{I} wird außerdem einem Differenzierer 44 zugeführt, der aus dem Augenblickswinkel die Augenblicksdrehzahl bzw. Augenblickswinkelgeschwindigkeit ω 45 erzeugt. Die Winkelgeschwindigkeit ω wird wiederum als Eingangswert den Logikblöcken 16 und 18 zugeführt.

Bei der erfindungsgemäßen Drehstrommotor-Ansteuerschaltung arbeiten sämtliche Funktionsblöcke der feldorientierten Regelung (Logikblöcke des programmgesteuerten Mikrocontrollers) außerhalb der rotierenden Domäne und zwar einschließlich des Motorsimulationsmodells 18. Das Motormodell 18 errechnet die erforderliche Phasenverschiebung γ zwischen der aktuellen Referenzposition ϕ_{REF} und der Phase der Eingangsspannung ϕ_{M} aus einer Stromamplitude, einem Winkelgeschwindigkeitswert und Motorparametern. Sämtliche Rechengrößen ändern sich im stationären Rotationszustand nicht. Bei geringen Drehmomenten und im Leerlauf des Drehstrommotors 2 werden die gemessenen Motorströme sehr gering. Eine Bestimmung des Augenblickswinkels des Motorstroms wird unter diesen Umständen schwierig. Bei der bevorzugten Ausführungsform gemäß Figur 1 wird deshalb der felderzeugende Stromanteil I_{d} auf Null geregelt, wobei sowohl die Winkelgeschwindigkeit ω als auch die Referenzposition ϕ_{REF} innerhalb dieses Regelkreises gewonnen werden. Somit bleibt die Motorregelung auch dann stabil, wenn der Motorstrom sich Null annähert.

Ein weiterer Vorteil der vorgeschlagenen feldorientierten Regelung besteht darin, dass diese bereits ohne Kenntnis der Motorparameter, das heißt unter Vernachlässigung der Berechnung der hierdurch verursachten Phasenverschiebung soweit funktionsfähig ist, dass der Motor zuverlässig und sicher in Betrieb genommen werden kann. Adaptive Algorithmen zur automatischen Bestimmung der Motorparameter im Rahmen eines Testlaufs sind denkbar.

## Patentansprüche

1. Drehstrommotor-Ansteuerschaltung (1) mit einer Leistungsschalteinrichtung (4), die die Anschlüsse (3) der Wicklungen eines Drehstrommotors (2) über Schaltbauelemente mit wenigstens zwei Versorgungsspannungspotentialen (5 ,6) koppeln kann,
einer Sensorschaltung (7) zum Erfassen von Wicklungsströmen und
einer die Steueranschlüsse (8) der Schaltbauelemente ansteuernden Steuerschaltung (9) mit Eingängen (10) zum Empfangen von die Wicklungsströme kennzeichnenden Signalen (I₁, I₂) der Sensorschaltung (7) und von Eingabesignalen (11), die wenigstens einen Soll-Betriebsparameter des Drehstrommotors (2) kennzeichnen,
wobei die Steuerschaltung (9) aufweist:
eine Einrichtung (12), die aus den die Wicklungsströme kennzeichnenden Signalen (I₁, I₂) ein Stromamplitudensignal (I_{q}, 13; I, 42), ein dem Augenblickswinkel entsprechendes Stromwinkelsignal (ϕ_{REF}, 14; ϕ_{I}, 43) und ein der Augenblicksdrehzahl entsprechendes Drehzahlsignal (ω, 15; 45) bestimmt,
eine Einrichtung (16), die unter Verwendung der Eingabesignale (11) und des Drehzahlsignals (ω, 15; 45) ein Spannungsamplitudensignal (U) (17) eines rotierenden Spannungsvektors ermittelt,
eine Motormodelleinrichtung (18), die unter Berücksichtigung von Motorparametern (R, L, k_{E}) aus dem Drehzahlsignal (ω, 15; 45) und dem Stromamplitudensignal (I_{q}, 13; I, 42) ein Phasendifferenzsignal (γ, 19) bestimmt,
eine Summiereinrichtung (20), die aus der Summe des Phasendifferenzsignals (γ, 19) und des Stromwinkelsignals (ϕ_{REF}, 14; ϕ_{I}, 43) ein Phasenwinkelsignal (ϕ_{M}, 21) des rotierenden Spannungsvektors bestimmt, und
eine Raumvektormodulator-Einrichtung (22), die aus den den rotierenden Spannungsvektor definierenden Signalen (U, 17, ϕ_{M}, 21) die Signale zum Ansteuern der Steueranschlüsse (8) der Schaltbauelemente bestimmt.

2. Drehstrommotor-Ansteuerschaltung nach Anspruch 1, **dadurch gekennzeichnet, dass** die Einrichtung (12), die aus den die Wicklungsströme kennzeichnenden Signalen (I₁, I₂) ein Stromamplitudensignal (Iq, 13; I, 42), ein dem Augenblickswinkel entsprechendes Stromwinkelsignal (ϕ_{REF}, 14; ϕ_{I}, 43) und ein der Augenblicksdrehzahl entsprechendes Drehzahlsignal (ω, 15; 45) bestimmt, aufweist:
eine erste Transformationseinrichtung (40), die aus den die Wicklungsströme kennzeichnenden Signalen (I₁, I₂) zwei orthogonale Komponenten (I_{α}, I_{β}) eines in dem feststehenden Koordinatensystem der Stator-Wicklungen des Drehstrommotors (2) rotierenden Stromvektors bestimmt, und
eine Einrichtung (39, 28-37; 41, 44), die aus den zwei orthogonalen Komponenten (I_{α}, I_{β}) das Stromamplitudensignal (Iq, 13; I, 42), das Stromwinkelsignal (ϕ_{REF}, 14; ϕ_{I}, 43) und das Drehzahlsignal (ω, 15; 45) bestimmt.

3. Drehstrommotor-Ansteuerschaltung nach Anspruch 2, **dadurch gekennzeichnet, dass** die Einrichtung, die aus den zwei orthogonalen Komponenten das Stromamplitudensignal, das Stromwinkelsignal und das Drehzahlsignal bestimmt, aufweist:
eine zweite Transformationseinrichtung (39), die aus den zwei orthogonalen Komponenten (I_{α}, I_{β}) des in dem feststehenden Koordinatensystem rotierenden Stromvektors zwei Komponenten (I_{q}, 13, I_{d}, 27) des Stromvektors in einem mit dem Drehfeld des Drehstrommotors (2) rotierenden Koordinatensystem bestimmt, wobei die beiden Komponenten eine felderzeugende Komponente (I_{d}, 27) und eine drehmomenterzeugende Komponente (I_{q}, 13) umfassen, wobei die drehmomenterzeugende Komponente (I_{q}, 13) als Stromamplitudensignal verwendet wird, und
eine Einrichtung (28-37), die aus der felderzeugenden Komponente (I_{d}, 27) mittels Integration unter Verwendung vorgegebener Anfangswerte (ω₀, 31, ϕ₀, 37) das Drehzahlsignal (ω, 15) und das Stromwinkelsignal (ϕ_{REF}, 14) bestimmt und das so bestimmte Stromwinkelsignal (ϕ_{REF}, 14) der zweiten Transformationseinrichtung (39) als Referenzwinkel, der die Orientierung des mit dem Drehfeld des Drehstrommotors (2) rotierenden Koordinatensystems definiert, eingibt.

4. Drehstrommotor-Ansteuerschaltung nach Anspruch 2, **dadurch gekennzeichnet, dass** die Einrichtung, die aus den zwei orthogonalen Komponenten das Stromamplitudensignal, das Stromwinkelsignal und das Drehzahlsignal bestimmt, aufweist:
eine dritte Transformationseinrichtung (41), die aus den zwei orthogonalen Komponenten (I_{α}, I_{β}) des rotierenden Stromvektors einen Betrag (I, 42) und einen Phasenwinkel (ϕ_{I}, 43) des rotierenden Stromvektors bestimmt, wobei der Betrag (I, 42) als Stromamplitudensignal und der Phasenwinkel (ϕ_{I}, 43) als Stromwinkelsignal verwendet wird, und
eine Einrichtung (44), die aus dem Phasenwinkel (ϕ_{I}, 43) des rotierenden Stromvektors mittels Differentiation das Drehzahlsignal (ω, 45) bestimmt.

5. Drehstrommotor-Ansteuerschaltung nach Anspruch 3 oder 4, **dadurch gekennzeichnet, dass** der Drehstrommotor (2) ein permanentmagnet-erregter Synchronmotor ist, so dass der Referenzwinkel (ϕ_{REF}, 14) beziehungsweise der Phasenwinkel (ϕ_{I}, 43) die Orientierung des Rotors definiert.

6. Drehstrommotor-Ansteuerschaltung nach Anspruch 5, **dadurch gekennzeichnet, dass** die Motormodelleinrichtung (18) als Phasendifferenzsignal (γ, 19) den Winkel zwischen einem ersten Zeiger und einem aus dem ersten Zeiger und einem senkrecht zum ersten Zeiger orientierten zweiten Zeiger zusammengesetzten Summenzeiger bestimmt,
wobei der Betrag des ersten Zeigers der Summe aus einem Produkt des Drehzahlsignals (ω, 15; 45) mit einem Rotorfluss-Motorparameter (k_{E}/2π) und dem Produkt des Stromamplitudensignals (I_{q}, 13; I, 42) mit einem der Statorwicklung zugeordneten Widerstands-Motorparameter (R) entspricht und
wobei der Betrag des zweiten Zeigers dem Produkt des Stromamplitudensignals (I_{q}, 13; I, 42) mit dem Drehzahlsignal (ω, 15; 45) und einem der Statorwicklung zugeordneten Induktivitäts-Motorparameter (L) entspricht, und
wobei die Motorparameter Eingabewerte der Motormodelleinrichtung sind.

7. Drehstrommotor-Ansteuerschaltung nach einem der Ansprüche 2 - 6, **dadurch gekennzeichnet,**
**dass** die Steuerschaltung (9) ein Mikrocontroller ist, und
**dass** die erste Transformationseinrichtung (40) einen Analog-Digital-Umsetzer umfasst, der die die Wicklungsströme kennzeichnenden Signale (I₁, I₂) in Digitalwerte umsetzt.

8. Drehstrommotor-Ansteuerschaltung nach einem der Ansprüche 1 - 6, **dadurch gekennzeichnet, dass** die Steuerschaltung (9) als FPGA ausgebildet ist.

9. Drehstrommotor-Ansteuerschaltung nach einem der Ansprüche 1 - 6, **dadurch gekennzeichnet, dass** die Steuerschaltung (9) ein Mikrocontroller ist.

10. Drehstrommotor-Ansteuerschaltung nach Anspruch 9,
**dadurch gekennzeichnet, dass** die Sensorschaltung (7) einen Analog-Digital-Umsetzer aufweist, so dass die die Wicklungsströme kennzeichnenden Signale (I₁, I₂) als Digitalwerte ausgegeben werden.

11. Drehstrommotor-Ansteuerschaltung nach einem der Ansprüche 1 - 10, **dadurch gekennzeichnet, dass** die Wicklungen drei Drehstromphasen zugeordnet sind und dass die Sensorschaltung (7) zumindest die Wicklungsströme von denjenigen Wicklungen erfasst, die zwei der drei Drehstromphasen zugeordnet sind.

12. Drehstrommotor-Ansteuerschaltung nach einem der Ansprüche 1 - 11, **dadurch gekennzeichnet,**
**dass** die Leistungsschalteinrichtung (4) ein Wechselrichter ist, der die Anschlüsse (3) der Wicklungen des Drehstrommotors (2) über Schaltbauelemente mit einem Versorgungsgleichspannungspotential (5) oder einem Massepotential (6) koppeln kann, und
**dass** die Raumvektormodulator-Einrichtung (22), die aus den den rotierenden Spannungsvektor definierenden Signalen (U, 17, ϕ_{M}, 21) die Signale zum Ansteuern der Steueranschlüsse (8) der Schaltbauelemente bestimmt, impulsbreitenmodulierte Signale an die Steueranschlüsse (8) anlegt.

13. Drehstrommotor-Ansteuerschaltung nach einem der Ansprüche 1 - 12, **dadurch gekennzeichnet, dass** die Motormodelleinrichtung ferner das Spannungsamplitudensignal (U, 17) des rotierenden Spannungsvektors empfängt und in die Bestimmung des Phasendifferenzsignals (γ, 19) einbezieht.

14. Verwendung der Drehstrommotor-Ansteuerschaltung nach einem der Ansprüche 1 - 13 zur Ansteuerung eines permanentmagnet-erregten Synchronmotors eines Pumpenantriebs.

## Claims

1. An AC motor control circuit (1) with a power switching device (4), which can couple the connections (3) of the windings of an AC motor (2) via switching components to at least two supply voltage potentials (5, 6), a sensor circuit (7) for detecting winding currents and a control circuit (9), which controls the control connections (8) of the switching components, with inputs (10) for receiving signals (I₁, I₂) indicative of the winding currents from the sensor circuit (7) and input signals (11), which are indicative of at least one desired operational parameter of the AC motor (2), wherein the control circuit (9) includes:
a device (12), which determines a current amplitude signal (I_{q}, 13; I, 42), a current angle signal (ϕ_{REF}, 14; ϕ_{I}, 43) corresponding to the instantaneous angle and a speed signal (ω, 15; 45) corresponding to the instantaneous speed from the signals (I₁, I₂) indicative of the winding currents,
a device (16), which determines a voltage amplitude signal (U) (17) of a rotating voltage vector using the input signals (11) and the speed signal (ω, 15; 45),
a motor modelling device (18), which determines a phase difference signal (γ, 19) from the speed signal (ω, 15; 45) and the current amplitude signal (I_{q}, 13; I, 42) having regard to motor parameters (R, L, k_{E}),
a summing device (20), which determines a phase angle signal (ϕ_{M}, 21) of the rotating voltage vector from the sum of the phase difference signal (γ, 19) and the current angle signal (ϕ_{REF}14, ϕ_{I}, 43), and
a spatial vector modulator device (22), which determines the signals for controlling the control connections (8) of the switching components from the signals (U, 17, ϕ_{M}, 21) defining the rotating voltage vector.

2. An AC motor control circuit as claimed in Claim 1, **characterised in that** the device (12), which determines a current amplitude signal (I_{q}, 13; I, 42), a current angle signal (ϕ_{REF}, 14; ϕ_{I}, 43) corresponding to the instantaneous angle and a speed signal (ω, 15; 45) corresponding to the instantaneous speed from the signals (I₁, I₂) indicative of the winding currents, includes:
a first transformation device (40), which determines, from the signals (I₁, I₂) characteristic of the winding currents, two orthogonal components (I_{α}, I_{β}), of a rotating current vector in the fixed coordinate system of the stator windings of the AC motor (2), and
a device (39, 28-37; 41, 44), which determines the current amplitude signal (I_{q}, 13; I, 42), the current angle signal (ϕ_{REF}, 14; ϕ_{I}, 43) and the speed signal (ω, 15; 45) from the two orthogonal components (I_{α}, I_{β}).

3. An AC motor control circuit as claimed in Claim 2, **characterised in that** the device, which determines, from the two orthogonal components, the current amplitude signal, the current angle signal and the speed signal, includes:
a second transformation device (39), which determines two components (I_{q}, 13, I_{d}, 27) of the current vector in a coordinate system rotating with the rotating field of the AC motor (2) from the two orthogonal components (I_{α}, I_{β}) of the current vector rotating in the fixed coordinate system, wherein the two components include a field-producing component (I_{d}, 27) and a torque-producing component (I_{q}, 13), wherein the torque-producing component (I_{q}, 13) is used as a current amplitude signal, and
a device (28-37), which determines the speed signal (ω, 15) and the current angle signal (ϕ_{REF}, 14) from the field generating component (I_{d}, 27) by means of integration whilst using predetermined starting values (ϕ₀, 31, ϕ₀, 37) and inputs the current angle signal (ϕ_{REF}, 14) thus determined from the second transformation device (39) as a reference angle, which defines the orientation of the coordinate system rotating with the rotating field of the AC motor (2).

4. An AC motor control circuit as claimed in Claim 2, **characterised in that** the device, which determines, from the two orthogonal components, the current amplitude signal, the current angle signal and the speed signal, includes:
a third transformation device (41), which determines, from the two orthogonal components ((I_{α}, I_{β}) of the rotating current vector, a value (I, 42) and a phase angle (ϕ_{I}, 43) of the rotating current vector, wherein the value (I, 42) is used as the current amplitude signal and the phase angle (ϕ_{I}, 43) is used as the current angle signal, and
a device (44), which determines the speed signal (ω, 45) by means of differentiation from the phase angle (ϕ_{I}, 43) of the rotating current vector.

5. An AC motor control circuit as claimed in Claim 3 or 4, **characterised in that** the AC motor (2) is a permanent magnet synchronous motor so that the reference angle (ϕ_{REF}, 14) or the phase angle (ϕ_{I}, 43) defines the orientation of the rotor.

6. An AC motor control circuit as claimed in Claim 5, **characterised in that** the motor modelling device (18) determines the angle constituting the phase difference signal (γ, 19) between a first indicator and a total indicator composed of the first indicator and a second indicator orientated perpendicularly to the first indicator, wherein the value of the first indicator corresponds to the total of a product of the speed signal (ω, 15; 45) with a rotor flux motor parameter (k_{E}/2π) and the product of the current amplitude signal (I_{q}, 13; I, 42) with a resistance motor parameter (R) associated with the stator winding and
wherein the value of the second indicator corresponds to the product of the current amplitude signal (I_{q}, 13; I, 42) with the speed signal (ω, 15; 45) and an inductivity motor parameter (L) associated with the stator winding, and
wherein the motor parameters are input values of the motor modelling device.

7. An AC motor control circuit as claimed in one of Claims 2-6, **characterised in that** the control circuit (9) is a microcontroller and that the first transformation device (40) includes an analogue-digital converter, which converts the signals (I₁, I₂) indicative of the winding currents into digital values.

8. An AC motor control circuit as claimed in one of Claims 1-6, **characterised in that** the control circuit (9) is constructed in the form of an FPGA.

9. An AC motor control circuit as claimed in one of Claims 1-6, **characterised in that** the control circuit (9) is a microcontroller.

10. An AC motor control circuit as claimed in Claim 9, **characterised in that** the sensor circuit (7) includes an analogue-digital converter so that the signals (I₁, I₂) indicative of the winding currents are output in the form of digital values.

11. An AC motor control circuit as claimed in one of Claims 1-10, **characterised in that** the windings are associated with three AC phases and that the sensor circuit (7) detects at least the winding currents of those windings which are associated with two of the three AC phases.

12. An AC motor control circuit as claimed in one of Claims 1-11, **characterised in that** the power switching device (4) is an inverter, which can couple the connections (3) of the windings of the AC motor (2) to a DC supply voltage potential (5) or an earth potential (6) via switching components, and that the spatial vector modulator device (22), which determines the signals for controlling the control connections (8) of the switching components from the signals (U, 17, ϕ_{M}, 21) defining the rotating voltage vector, applies pulse-width modulated signals to the control connections (8).

13. An AC motor control circuit as claimed in one of Claims 1-12, **characterised in that** the motor modelling device further receives the voltage amplitude signal (U, 17) of the rotating voltage vector and factors it into the determination of the phase difference signal (γ, 19).

14. The use of the AC motor control circuit as claimed in one of Claims 1-13 for controlling a permanent magnet synchronous motor of a pump drive system.

## Revendications

1. Circuit de commande de moteur triphasé (1) comprenant un dispositif de commutation de puissance (4) qui, au moyen de composants de commutation, peut coupler les connexions (3) des enroulements d'un moteur triphasé (2) à au moins deux potentiels de tension d'alimentation (5, 6),
un circuit détecteur (7) servant à détecter des courants d'enroulement et
un circuit de commande (9) commandant les connexions de commande (8) des composants de commutation et comportant des entrées (10) servant à recevoir des signaux (I₁, I₂) du circuit détecteur (7), qui caractérisent les courants d'enroulement, et des signaux d'introduction (11), qui caractérisent au moins un paramètre de fonctionnement de consigne du moteur triphasé (2),
dans lequel le circuit de commande (9) comprend :
un dispositif (12) qui, à partir des signaux (I₁, I₂) caractérisant les courants d'enroulement, détermine un signal d'amplitude de courant (I_{q}, 13 ; I, 42), un signal d'angle de courant (ϕ_{REF}, 14 ; ϕ_{I}, 43), correspondant à l'angle instantané, et un signal de vitesse de rotation (ω, 15 ; 45) correspondant à la vitesse de rotation instantanée,
un dispositif (16) qui, en utilisant les signaux d'introduction (11) et le signal de vitesse de rotation (ω, 15 ; 45), détecte un signal d'amplitude de tension (U) (17) d'un vecteur de tension tournant,
un dispositif de modèle moteur (18) qui, en tenant compte de paramètres de moteur (R, L, k_{E}), détermine un signal de différence de phase (γ, 19) à partir du signal de vitesse de rotation (ω, 15 ; 45) et du signal d'amplitude de courant (I_{q}, 13 ; I, 42),
un dispositif de sommation (20) qui, à partir de la somme du signal de différence de phase (γ, 19) et du signal d'angle de courant (ϕ_{REF}, 14 ; ϕ_{I}, 43), détermine un signal d'angle de phase (ϕ_{M}, 21) du vecteur de tension tournant, et
un dispositif modulateur de vecteur spatial (22) qui, à partir des signaux (U, 17, ϕ_{M}, 21) définissant le vecteur de tension tournant, détermine les signaux servant à commander les connexions de commande (8) des composants de commutation.

2. Circuit de commande de moteur triphasé suivant la revendication 1, **caractérisé en ce que** le dispositif (12) qui, à partir des signaux (I₁, I₂) caractérisant les courants d'enroulement, détermine un signal d'amplitude de courant (I_{q}, 13 ; I, 42), un signal d'angle de courant (ϕ_{REF}, 14 ; ϕ_{I}, 43) correspondant à l'angle instantané et un signal de vitesse de rotation (ω, 15 ; 45) correspondant à la vitesse de rotation instantanée, comprend :
un premier dispositif de transformation (40) qui, à partir des signaux (I₁, I₂) caractérisant les courants d'enroulement, détermine deux composantes orthogonales (I_{α}, I_{β}) d'un vecteur de courant tournant dans le système de coordonnées fixe des enroulements de stator du moteur triphasé (2), et
un dispositif (39, 28-37 ; 41,44) qui, à partir des deux composantes orthogonales (I_{α}, I_{β}), détermine le signal d'amplitude de courant (I_{q}, 13 ; I, 42), le signal d'angle de courant (ϕ_{REF}, 14 ; ϕ_{I}, 43) et le signal de vitesse de rotation (ω, 15 ; 45).

3. Circuit de commande de moteur triphasé suivant la revendication 2, **caractérisé en ce que** le dispositif qui, à partir des deux composantes orthogonales, détermine le signal d'amplitude de courant, le signal d'angle de courant et le signal de vitesse de rotation, comprend :
un second dispositif de transformation (39) qui, à partir des deux composantes orthogonales (I_{α}, I_{β}) du vecteur de courant tournant dans le système de coordonnées fixe, détermine deux composantes (I_{q}, 13, I_{d}, 27) du vecteur de courant dans un système de coordonnées tournant avec le champ tournant du moteur triphasé (2), les deux composantes comprenant une composante productrice de champ (I_{d}, 27), et une composante productrice de couple (I_{q}, 13), la composante productrice de couple (I_{q}, 13) étant utilisée en tant que signal d'amplitude de courant, et
un dispositif (28-37) qui, à partir de la composante productrice de champ (I_{d}, 27), détermine, en utilisant des valeurs initiales préfixées (ω₀, 31, ϕ₀, 37), le signal de vitesse de rotation (ω, 15) et le signal d'angle de courant (ϕ_{REF}, 14) au moyen d'une intégration et introduit le signal d'angle de courant (ϕ_{REF}, 14), ainsi déterminé, du second dispositif de transformation (39), en tant qu'angle de référence qui définit l'orientation du système de coordonnées tournant avec le champ tournant du moteur triphasé (2).

4. Circuit de commande de moteur triphasé suivant la revendication 2, **caractérisé en ce que** le dispositif qui, à partir des deux composantes orthogonales, détermine le signal d'amplitude de courant, le signal d'angle de courant et le signal de vitesse de rotation, comprend :
un troisième dispositif de transformation (41) qui, à partir des deux composantes orthogonales (I_{α}, I_{β}) du vecteur de courant tournant, détermine une valeur (I, 42) et un angle de phase (ϕ_{I}, 43) du vecteur de courant tournant, la valeur (I, 42) étant utilisée en tant que signal d'amplitude de courant et l'angle de phase (ϕ_{I}, 43) utilisé en tant que signal d'angle de courant, et
un dispositif (44) qui, à partir de l'angle de phase (ϕ_{I}, 43) du vecteur de courant tournant détermine le signal de vitesse de rotation (ω, 45) au moyen d'une dérivation.

5. Circuit de commande de moteur triphasé suivant la revendication 3 ou 4, **caractérisé en ce que** le moteur triphasé (2) est un moteur synchrone à excitation par aimant permanent, de sorte que l'angle de référence (ϕ_{REF}, 14), ou respectivement l'angle de phase (ϕ_{I}, 43), définit l'orientation du rotor.

6. Circuit de commande de moteur triphasé suivant la revendication 5, **caractérisé en ce que** le dispositif de modèle moteur (18) détermine, en tant que signal de différence de phase (y, 19), l'angle entre un premier indicateur et un indicateur somme composé à partir du premier indicateur et d'un second indicateur orienté perpendiculairement au premier indicateur,
dans lequel la valeur du premier indicateur correspond à la somme du produit du signal de vitesse de rotation (ω, 15 ; 45) par un paramètre de moteur-flux de rotor (k_{E}/2π) et du produit du signal d'amplitude de courant (I_{q}, 13 ; I, 42) par un paramètre de moteur-résistance (R) associé à l'enroulement de stator et
dans lequel la valeur du second indicateur correspond au produit du signal d'amplitude de courant (I_{q}, 13 ; I, 42) par le signal de vitesse de rotation (ω, 15 ; 45) et par un paramètre de moteur-inductance (L) associé à l'enroulement de stator, et
dans lequel les paramètres de moteur sont des valeurs d'introduction du dispositif de modèle moteur.

7. Circuit de commande de moteur triphasé suivant l'une des revendications 2 - 6, **caractérisé**
**en ce que** le circuit de commande (9) est un microcontrôleur et
**en ce que** le premier dispositif de transformation (40) contient un convertisseur analogique-numérique qui convertit les signaux (I₁, I₂) caractérisant les courants d'enroulement en valeurs numériques.

8. Circuit de commande de moteur triphasé suivant l'une des revendications 1 - 6, **caractérisé en ce que** le circuit de commande (9) est réalisé sous forme de FPGA (Field Programmable Gate Array ou Réseau de Portes Programmable par l'Utilisateur) .

9. Circuit de commande de moteur triphasé suivant l'une des revendications 1 - 6, **caractérisé en ce que** le circuit de commande (9) est un microcontrôleur.

10. Circuit de commande de moteur triphasé suivant la revendication 9, **caractérisé en ce que** le circuit détecteur (7) comprend un convertisseur analogique-numérique, de sorte que les signaux (I₁, I₂,) caractérisant les courants d'enroulement sont délivrés sous forme de valeurs numériques.

11. Circuit de commande de moteur triphasé suivant l'une des revendications 1 - 10, **caractérisé en ce que** les enroulements sont associés à trois phases de courant triphasé et **en ce que** le circuit détecteur (7) reçoit au moins les courants d'enroulement de ceux des enroulements qui sont associés à deux des trois phases de courant triphasé.

12. Circuit de commande de moteur triphasé suivant l'une des revendications 1 - 11, **caractérisé**
**en ce que** le dispositif de commutation de puissance (4) est un onduleur qui peut coupler les connexions (3) des enroulements du moteur triphasé (2) à un potentiel de tension continue d'alimentation (5) ou à un potentiel de masse (6) au moyen de composants de commutation, et
**en ce que** le dispositif modulateur de vecteur spatial (22) qui, à partir des signaux (U, 17, ϕ_{M}, 21) définissant le vecteur de tension tournant, détermine les signaux servant à commander les connexions de commande (8) des composants de commutation, applique des signaux modulés en durée d'impulsion aux connexions de commande (8).

13. Circuit de commande de moteur triphasé suivant l'une des revendications 1 - 12, **caractérisé en ce que** le dispositif de modèle moteur reçoit en outre le signal d'amplitude de tension (U, 17) du vecteur de tension tournant et l'intègre dans la détermination du signal de différence de phase (γ, 19).

14. Utilisation du circuit de commande de moteur triphasé suivant l'une des revendications 1 - 13 pour la commande d'un moteur synchrone excité par aimant permanent d'un entraînement de pompe.
